(19) Europäisches Patentamt
European Patent Office
Office européen des brevets

(11) Veröffentlichungsnummer: **0 307 756 A2**

(12) **EUROPÄISCHE PATENTANMELDUNG**

(21) Anmeldenummer: **88114483.6**

(51) Int. Cl.4: **C07F 7/18 , C08G 18/77**

(22) Anmeldetag: **05.09.88**

(30) Priorität: **16.09.87 DE 3730986**

(43) Veröffentlichungstag der Anmeldung: **22.03.89 Patentblatt 89/12**

(84) Benannte Vertragsstaaten: **CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Mormann, Werner, Prof. Dr.**
**Zum Wolfsloch 30**
**D-4910 Kreuztal(DE)**
Erfinder: **Leukel, Gabriele**
**Köln-Leipziger-Strasse 4**
**D-5239 Norken(DE)**

(54) **Verfahren zur Herstellung von Isocyanaten und ihre Verwendung zur Herstellung von Estergruppen aufweisenden Polyisocyanaten und ausgewählte derartige Estergruppen aufweisende Polyisocyanate.**

(57) Ein Verfahren zur Herstellung von silylierte alkoholische oder phenolische Hydroxylgruppen als Substituenten aufweisenden Isocyanaten durch Umsetzung von der den Isocyanaten entsprechenden, silylierte alkoholische oder phenolische Hydroxylgruppen als Substituenten aufweisenden Amine mit minestens äquivalenten Mengen an unter den Verfahrensbedingungen nicht flüchtigen organischen Polyisocyanaten auf Temperaturen von bis zu 300 °C, gegebenenfalls unter verminderten Druck und Gewinnung der Verfahrensprodukte als Destillat, deren Verwendung als Reaktionspartner von Isocyanatcarbonsäurechloriden bei der Herstellung von Estergruppen aufweisenden Polyisocyanaten, sowie ausgewählte, so erhaltene Polyisocyanate.

EP 0 307 756 A2

# Verfahren zur Herstellung von Isocyanaten und ihre Verwendung zur Herstellung von Estergruppen aufweisenden Polyisocyanaten und ausgewählte derartige Estergruppen aufweisende Polyisocyanate

Die vorliegende Erfindung betrifft ein neues Verfahren zur Herstellung von, silylierte alkoholische oder phenolische Hydroxylgruppen oder silylierte Carboxylgruppen als Substituenten aufweisenden Isocyanaten und die Verwendung der nach diesem Verfahren erhaltenen Verbindungen als Reaktionspartner von Isocyanatocarbonsäurechloriden bei der Herstellung von Estergruppen aufweisenden Polyisocyanaten, sowie ausgewählte derartige Estergruppen aufweisende Polyisocyanate.

Die Herstellung von organischen Isocyanaten, die silylierte alkoholische Hydroxylgruppen als Substituenten aufweisen, ist an sich bekannt. So erhält man Siloxyalkylisocyanate durch Umsetzung der den Isocyanaten entsprechenden Aminoalkohole mit Bis-(3-chlorphenyl)-carbonat zum N-(2-Hydroxyalkyl)-carbamidsäure-4-chlorphenylester und dessen anschließende Silylierung mit Trimethylchlorsilan in Gegenwart einer äquimolaren Menge an Triethylamin und Spaltung des gebildeten Carbamidsäureesters (H.R. Kricheldorf, Liebigs Annalen der Chemie (1973), 772).

Die Herstellung von aromatischen Isocyanaten, die silylierte phenolische Hydroxylgruppen als Substituenten aufweisen, durch thermische Spaltung der entsprechenden O-Phenyl-urethane ist ebenfalls von H.R. Kricheldorf a.a.O. beschrieben worden. Der hierzu eingesetzte Ester muß aus N,O-bissilylierten Aminophenolen und Chlorameisensäurephenylester unter Zusatz von Triethylamin hergestellt werden.

Ein weiteres Verfahren zur Herstellung von silylierte Hydroxylgruppen aufweisenden Isocyanaten geht von der Umsetzung des Trimethylsiloxy-benzoylchlorids mit Trimethylsilylazid aus, wobei die Isocyanate durch Curtiusabbau der Säureazide gebildet werden. Dieses Verfahren ist auf Trimethylsiloxyarylisocyanate beschränkt, da Trimethylsiloxyalkanoylchloride nicht herstellbar sind (G. Schwarz, H. Alberts, H.R. Kricheldorf, Liebigs Annalen der Chemie (1981), 1257).

Alle diese Verfahren des Standes der Technik stellen umständliche Mehrstufen-Verfahren dar, die nicht allgemein anwendbar sind und bislang ausschließlich Eingang in die wissenschaftliche Literatur, aber keine Bedeutung in der technischen Praxis gefunden haben.

Wie jetzt überraschend gefunden wurde, gelingt die Herstellung von organischen Isocyanaten, die silylierte Hydroxylgruppen oder silylierte Carboxylgruppen als Substituenten aufweisen, auf einfachem Wege durch Umsetzung der entsprechenden O-silylierten Ausgangsmaterialien (Hydroxylamin, Aminoalkohole, Aminophenole oder Aminocarbonsäuren) mit mindestens äquivalenten Mengen an nicht flüchtigen organischen Polyisocyanaten bei erhöhten Temperaturen. Die hierbei eingesetzten O-silylierten Ausgangsmaterialien können ihrerseits durch einfache Umsetzung der entsprechenden, vorstehend genannten Verbindungen mit Hexamethyldisilazan (HMDS) hergestellt werden.

Gegenstand der Erfindung ist ein Verfahren zur Herstellung von silylierte Hydroxylgruppen oder silylierte Carboxylgruppen als Substituenten aufweisenden Isocyanaten, dadurch gekennzeichnet, daß man

i) den Isocyanaten entsprechende, silylierte alkoholische oder phenolische Hydroxylgruppen oder silylierte Carboxylgruppen als Substituenten aufweisende Amine oder O-silyliertes Hydroxylamin

in Abmischung mit

ii) mindestens äquivalenten Mengen an unter den Verfahrensbedingungen nicht flüchtigen organischen Polyisocyanaten

auf Temperaturen von bis zu 300 °C, gegebenenfalls unter vermindertem Druck erhitzt und die Verfahrensprodukte in Form des bei dieser Umsetzung anfallenden Destillats gewinnt.

Die erfindungsgemäßen Verfahrensprodukte mit silylierten Hydroxylgruppen sind insbesondere als Reaktionspartner von Isocyanatocarbonsäurechloriden zur Herstellung von Estergruppen aufweisenden Polyisocyanaten geeignet.

Gegenstand der Erfindung ist demzufolge auch die Verwendung der nach dem erfindungsgemäßen Verfahren erhaltenen, silylierte Hydroxylgruppen als Substituenten aufweisenden Isocyanate als Reaktionspartner von Isocyanatocarbonsäurechloriden bei der Herstellung von Estergruppen aufweisenden Polyisocyanaten.

Gegenstand der Erfindung sind weiterhin einige ausgewählte, so erhaltene Estergruppen aufweisende Diisocyanate, ausgewählt aus der Gruppe bestehend aus 4-(4-Isocyanatocyclohexyloxycarbonyl)-phenylisocyanat, 2-Methyl-4-(4-isocyanatophenoxycarbonyl)-phenylisocyanat und 4-(3-Methyl-4-isocyanatophenoxycarbonyl)-phenylisocyanat.

Die erfindungsgemäßen Verfahrensprodukte mit silylierten Carboxylgruppen können auf einfache Weise mit Chlorierungsmitteln wie Thionylchlorid oder Phosphoroxychlorid in die entsprechenden Isocyanatocarbonsäurechloride überführt werden.

Ausgangsmaterialien (i) für das erfindungsgemäße Verfahren sind beliebige primäre Amine, die mindestens eine silylierte alkoholische oder phenolische Hydroxylgruppe oder mindestens eine silylierte Carboxylgruppe als Substituenten tragen oder O-silyliertes Hydroxylamin. Besonders gut geeignete, derartige Substituenten aufweisende Amine sind Verbindungen der Formeln

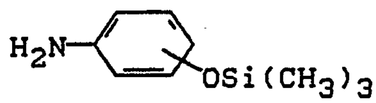

oder

$H_2N$-(-$CH_2$-)$_m$-$OSi(CH_3)_3$

wobei
m für 0 oder eine ganze Zahl von 2 bis 4 steht.

Ebenfalls geeignet sind O-silylierte Aminophenole, die in 2-Stellung zur Aminogruppe inerte Substituenten tragen, wobei als Substituenten Chlor, Brom die Nitrogruppe, Alkylreste mit 1 bis 20, vorzugsweise 1 bis 4 Kohlenstoffatomen, Alkoxyreste mit 1 bis 20, vorzugsweise 1 bis 4 Kohlenstoffatomen oder Alkoxycarbonylreste mit 1 bis 20, vorzugsweise 1 bis 4 Kohlenstoffatomen im Alkoxyrest in Betracht kommen.

Zu den geeigneten bzw. besonders gut geeigneten silylierten Ausgangsmaterialien gehören beispielsweise 2-, 3- oder 4-(Trimethylsilyloxi)-anilin, 2-(Trimethylsilyloxi)-ethylamin, 3-(Trimethylsilyloxi)-propylamin oder 4-(Trimethylsilyloxi)-butylamin. Ebenfalls geeignet ist beispielsweise 1-(2-Aminoethoxy)-2-Trimethylsilyloxy-ethan oder 1,1-Dimethyl-2-trimethylsilyloxy-ethylamin, Trimethylsiloxyamin, 4-(Trimethylsiloxy)-cyclohexylamin, 4-Aminobenzoesäuretrimethylsilylester oder 2-Methyl-4-trimethylsiloxyphenylamin. Ebenfalls geeignet, jedoch weniger bevorzugt sind die entsprechenden Verbindungen, deren Substituenten am Silicium zumindest teilweise höhere Alkylreste, beispielsweise Ethyl-, Propyl- oder Butylreste anstelle der Methylreste darstellen.

Die Herstellung derartiger O-silylierter Aminophenole bzw. Aminoalkohole kann beispielsweise in Analogie zu der von E. Lukevits u.a. in Zh. Obshch. Khim. 39, 806 (1969) beschriebenen Methode durch Monosilylierung der Aminophenole bzw. Aminoalkohole unter Verwendung von Hexaalkyldisilazan, vorzugsweise von Hexamethyldisilazan (HMDS) erfolgen. Die Umsetzung kann beispielsweise dergestalt erfolgen, daß man die Aminophenole bzw. Aminoalkohole mit HMDS unter Einhaltung eines Molverhältnisses von Hydroxylgruppen zu HMDS von 1:0,5 bis 1:0,6 in Gegenwart einer katalytischen Menge an Trimethylchlorsilan auf Temperaturen von bis zu 170 °C, vorzugsweise 50 bis 170 °C, erwärmt, wobei die selektive Silylierung der Hydroxylgruppen unter Ammoniakabspaltung erfolgt.

Als Komponente (ii) werden beim erfindungsgemäßen Verfahren hochsiedende Polyisocyanate eingesetzt. Unter "hochsiedenden" Polyisocyanaten sind in diesem Zusammenhang an sich bekannte organische Polyisocyanate zu verstehen, die unter den Bedingungen des erfindungsgemäßen Verfahrens nicht sieden, d.h., es handelt sich entweder um nichtdestillierbare Polyisocyanate oder um hochsiedende Polyisocyanate, deren Siedepunkt bei dem jeweils zur Anwendung gelangenden Druck vorzugsweise mindestens 20 °C über dem Siedepunkt des jeweiligen Verfahrensprodukts liegt. Grundsätzlich sind alle organische Polyisocyanate, die diesen Bedingungen genügen, geeignet. Bevorzugt werden, diesen Bedingungen entsprechende, aromatische Polyisocyanate eingesetzt. Besonders gut geeignet sind beispielsweise Polyisocyanate oder Polyisocyanatgemische der Diphenylmethanreihe wie z.B. 4,4′-Diisocyana todiphenylmethan, dessen Gemische mit 2,4′- und gegebenenfalls 2,2′-Diisocyanatodiphenylmethan oder Polyisocyanatgemische, die neben diesen Isomeren höherkernige Polyisocyanate enthalten, beispielsweise solche, wie sie bei der Phosgenierung von Anilin/Formaldehyd-Kondensaten anfallen. Auch aliphatische Polyisocyanate wie Hexamethylendiisocyanat oder Isophorondiisocyanat sind prinzipiell geeignet.

Die Polyisocyanate (ii) werden bei der Durchführung des erfindungsgemäßen Verfahrens in mindestens äquivalenten Mengen eingesetzt. Dies bedeutet, daß für jede Aminogruppe der Komponente (i) mindestens eine, vorzugsweise mindestens 1,1, im allgemeinen bis zu 20 Isocyanatgruppen der Komponente (ii) zur Verfügung stehen. Die Verwendung eines noch höheren Überschusses der Komponente (ii) ist zwar prinzipiell möglich, würde jedoch zu einer Ausbeuteverbesserung nichts mehr beitragen.

Zur Durchführung des erfindungsgemäßen Verfahrens kann beispielsweise dergestalt vorgegangen werden, daß man die Polyisocyanatkomponente (ii) in einem geeigneten, mit Rührer und Destillationsbrücke versehenen Reaktionsgefäß vorlegt und die Komponente (i) innerhalb des Temperaturbereichs von 20 bis 300 °C, insbesondere 20 bis 200 °C, vorzugsweise zunächst bei ca. 100 bis 140 °C, unter Rühren

portionsweise zugibt, nach beendeter Zugabe auf bis zu 2000 °C erwärmt und gegebenenfalls unter Anlegen von Vakuum das sich spontan bildende Verfahrensprodukt als Destillat gewinnt. Es kann jedoch auch so vorgegangen werden, daß man die Reaktionspartner (i) und (ii) bei niederen Temperaturen miteinander vermischt und dann, gegebenenfalls unter Anlegen von Vakuum, auf bis zu 200 °C erhitzt, wobei gleichzeitig das entstehende Verfahrensprodukt als Destillat gewonnen wird.

Die bevorzugten erfindungsgemäßen Verfahrensprodukte entsprechen den Formeln

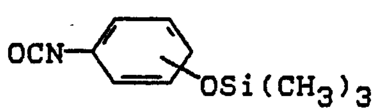 ,

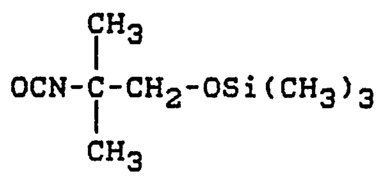

bzw.

$OCN-(-CH_2)_m-OSi(CH_3)_3$,

wobei
m für Null oder eine ganze Zahl von 2 bis 4 steht.

Die erfindungsgemäßen Verfahrensprodukte mit silylierten Hydroxylgruppen stellen wertvolle Zwischenprodukte für die Herstellung von Estergruppen aufweisenden Polyisocyanaten dar. Diese können ihrerseits als Polyisocyanatkomponente bei der Herstellung von Polyurethanen verwendet werden.

Bei dieser erfindungsgemäßen Verwendung der erfindungsgemäßen Verfahrensprodukte werden diese mit Isocyanatocarbonsäurehalogeniden, insbesondere -chloriden oder -fluoride, besonders bevorzugt -chloriden zur Reaktion gebracht. Geeignete Isocyanatocarbonsäurechloride sind insbesondere Verbindungen der allgemeinen Formel

OCN-R-COCl

für welche
R für einen aliphatischen Kohlenwasserstoffrest mit 1 bis 5 Kohlenstoffatomen oder einen aromatischen Kohlenwasserstoffrest mit 6 bis 10 Kohlenstoffatomen steht, wobei zwischen Isocyanatgruppe und der Chlorcarbonylgruppe mindestens 2 Kohlenstoffatome angeordnet sind.

Beispiele für derartige besonders bevorzugte Isocyanatocarbonsäurechloride sind 3-Isocyanatopropionsäurechlorid, 4-Isocyanatobuttersäurechlorid, 3-Isocyanatbenzoesäurechlorid oder 4-Isocyanatobenzoesäurechlorid.

Neben diesen besonders bevorzugt einzusetzenden Isocyanatocarbonsäurechloriden können auch solche der zuletzt genannten allgemeinen Formel verwendet werden, für welche R für einen aliphatischen Kohlenwasserstoffrest mit mehr als 6 Kohlenstoffatomen oder einen cycloaliphatischen Kohlenwasserstoffrest steht. Beispiele für derartige Isocyanatocarbonsäurechloride sind 12-Isocyanatododecansäurechlorid oder 4-Isocyanatocyclohexancarbonsäurechlorid.

Ferner sind solche Isocyanatobenzoesäurechloride geeignet, die in 2-Stellung zur NCO-Gruppe inerte Substituenten tragen, wobei als inerte Substituenten insbesondere solche der oben im Zusammenhang mit den Aminophenolen genannten Art in Betracht kommen.

Ferner geeignet sind solche Isocyanatocarbonsäurechloride, die mehr als eine Isocyanatgruppe und/oder mehr als eine Carbonsäurechloridgruppe aufweisen. Hierzu gehören beispielsweise 2,4-Diisocyanato-benzoesäurechlorid, 2,6-Diisocyanatocapronsäurechlorid oder 2-Isocyanato-glutarsäure-dichlorid. Die Verwendung derartiger, mehr als eine Isocyanat- und/oder Chlorcarbonylgruppe aufweisender Verbindungen ist allerdings weniger bevorzugt.

Bei der erfindungsgemäßen Verwendung der erfindungsgemäßen Verfahrensprodukte als Reaktionspartner für die beispielhaft genannten Isocyanatacarbonsäurechloride, d.h. beim Verfahren zur Herstellung von Estergruppen aufweisenden Polyisocyanaten unter Verwendung der genannten Ausgangsmaterialien wird die Menge der Reaktionspartner im allgemeinen so gewählt, daß auf jedes Mol an Chlorcarbonylgruppen mindestens 0,8 Mol an silylierten Hydroxylgruppen entfallen. Vorzugsweise werden die Mengen der Reaktionspartner so gewählt, daß auf jedes Mol an Chlorcarbonylgruppen 0,8 bis 1,2 Mol an silylierten Hydroxylgruppen entfallen. Besonders bevorzugt wird unter Einhaltung von äquimolaren Mengen

(Molverhältnis der genannten Reaktivgruppen = 1:1) gearbeitet. Die Verwendung eines über den Bereich von 0,8 bis 1, 2 Mol hinausgehenden Überschusses einer der beiden Komponenten wäre zwar möglich, würde jedoch lediglich zu Ausbeuteverlusten führen.

Die Umsetzung erfolgt im allgemeinen innerhalb des Temperaturbereiche von 50 bis 170 °C, wobei man das Ende der Reaktion (falls kein Säurechlorid-Überschuß eingesetzt worden ist) am Verschwinden der Säurechlorid-carbonylbande bei 1800 $cm^{-1}$ im Infrarotspektrum leicht erkennen kann.

Die Umsetzung kann unter Verwendung von geeigneten Katalysatoren durchgeführt werden. Diese Katalysatoren werden in Mengen von 0,1 bis 10, vorzugsweise 0,1 -2 Gew.-%, bezogen auf das Gewicht der Reaktanten eingesetzt. Geeignete Katalysatoren sind Lewis-Säuren wie Titantrichlorid, Zinndichlorid, Zinkchlorid oder Säuren wie Schwefelsäure oder Basen wie 4-Dimethylaminopyridin.

Die Umsetzung kann in Ab- oder Anwesenheit eines geeigneten Lösungsmittels durchgeführt werden. Geeignete Lösungsmittel sind beispielsweise Diethylether, Toluol, Xylol, Chlorbenzol, o-Dichlorbenzol, Trichlorethylen, Essigsäureethylester, Essigsäurebutylester oder beliebige Gemische derartige Lösungsmittel.

Die auf diese Weise unter Verwendung der erfindungsgemäßen Verfahrensprodukte erhaltenen Estergruppen aufweisenden Polyisocyanate stellen teilweise neue Substanzen dar. Dies gilt insbesondere für die ausgewählten, als Stoff beanspruchten Verbindungen. Im übrigen handelt es sich bei den Estergruppen aufweisenden Polyisocyanaten um wertvolle Ausgangsmaterialien für die Herstellung von Polyurethankunststoffen dar. Die entsprechenden Verbindungen mit aliphatisch oder cycloaliphatisch gebundenen Isocyanatgruppen eignet sich ausgezeichnet zur Herstellung von Ein- oder Zweikomponenten-Polyurethanlacken. Die Funktionalität der Estergruppen aufweisenden Polyisocyanate kann nicht nur durch entsprechende Wahl der bei ihrer Herstellung eingesetzten Ausgangsmaterialien sondern auch gegebenenfalls durch Verwendung von Ge mischen unterschiedlicher Ausgangsmaterialien dem jeweils gewünschten Einsatzzweck angepaßt werden.

Auf aromatischen Isocyanatocarbonsäurechloriden und silylierten Isocyanatophenolen basierende Esterdiisocyanate weisen zum Teil interessante flüssigkristalline Eigenschaften auf.

In den nachfolgenden Beispielen beziehen sich alle Prozentangaben auf Gewichtsprozente.

1. Herstellung von O-silylierten Ausgangsmaterialien (allgemeine Herstellungsvorschrift)

In einem ausgeheizten 500 ml Dreihalskolben mit Magnetrührstab, Innenthermometer, Tropftrichter und Rückflußkühler mit Blasenzähler, Trockenrohr und Gasableitung werden 1 Mol Aminogruppen aufweisendes Ausgangsmaterial vorgelegt und 0,55 Mol Hexamethyldisilazan zügig zugetropft. Nach Zugabe von drei Tropfen Trimethylmonochlorsilan als Katalysator wird die in manchen Fällen heterogene Flüssigkeitsmischung langsam erwärmt. Bei 50 bis 55 °C kann die erste Ammoniakentwicklung beobachtet werden, die bei den Aminoalkoholen bei 85 bis 95 °C und den Aminophenolen bei 130 °C sehr heftig wird. Die Temperatur wird bis zum Ende der Gasentwicklung (drei bis sieben Stunden) auf 140 bis 170 °C gesteigert. Dann wird die homogene Flüssigkeit zur Reinigung über eine verspiegelte Vigreuxkolonne rektifiziert.

1.1 4-Trimethylsiloxyphenylamin

Ausbeute: 88,6 %
Kp.: 114 -116 °C (20 mbar)
$n_D^{20}$ : 1,5189

1.2 3-Trimethylsiloxyphenylamin

Ausbeute: 81 %
Kp.: 115 - 116 °C (20mbar)

1.3 4-Trimethylsiloxybutylamin

Ausbeute: 83 %
Kp.: 63 - 64° C (20 mbar)
IR-Spektrum:
3380 und 3300 $cm^{-1}$ (NH-Valenzschwingung)
1600 $cm^{-1}$ (NH-Deformationsschwingung)
Elementaranalyse %:
Berechnet :
C 51,44 H 11,6 N 6,0
Gefunden:
C 51,40 H 11, 1 N 5,8

1.4 3-Trimethylsiloxypropylamin

Ausbeute: 75%
Kp.: 134 - 135° C (495 mbar)
$n_D^{20}$ : 1,4195
IR-Spektrum:
3390 und 3340 $cm^{-1}$ (NH-Valenzschwingung)
1600 $cm^{-1}$ (NH-Deformationsschwingung)

| | | | | |
|---|---|---|---|---|
| $^1$H-NMR-Spektrum: | 3,45 (t); 2 : | 2,55 (t); 2 : | 1,45 (m); 2 : | 0,85 ppm (s) 2 |

1.5 2-Trimethylsiloxyethylamin

Ausbeute: 83 %
Kp.: 38 - 39° C (20 mbar)
$n_D^{20}$ : 1,4131
IR-Spektrum:
3380 und 3300 $cm^{-1}$ (NH-Valenzschwingung)
1590 $cm^{-1}$ (NH-Deformationsschwingung)

1.6 2-Trimethylsiloxy-2-methylpropylamin

Ausbeute: 85 %
Kp: 38 - 38,5° C (20 mbar)
$n_D^{20}$ : 1,4089
IR-Spektrum:
3380 und 3280 $cm^{-1}$ (NH-Valenzschwingung)
1590 $cm^{-1}$ (NH-Deformationsschwingung)

1.7 trans-4-Trimethylsiloxycyclohexylamin

Ausbeute: 85 %
KP: 81 - 83° C (20 mbar)
$n_D^{20}$ : 1,4511
IR-Spektrum: 3365 und 3280 $cm^{-1}$

1.8 Trimethylsiloxyamin

Ausbeute: 51 %
Kp: 99 - 100 °C
$n_D^{20}$ : 1,4010
IR-Spektrum: 3370 und 3280 $cm^{-1}$

1.9 4-Aminobenzoesäuretrimethylsilylester

Ausbeute: 91 %
Kp: 110 °C (0,015 mbar)
m.p. : 62 °C
IR-Spektrum: 3370 und 1730 $cm^{-1}$

1.10 2-Methyl-4-trimethylsiloxyphenylamin

Ausbeute: 94 %
Kp: 121 °C (20 mbar)
IR-Spektrum: 3460, 3370 und 3280 $cm^{-1}$

2. Erfindungsgemäßes Verfahren (allgemeine Herstellungsvorschrift)

In einem 500 ml Planschliffkolben mit Magnetrührstab, Innenthermometer, Tropftrichter und Destillationsbrücke, sowie einem 100 ml Stickstoffkolben als Vorlage werden 500 g (2 Mol) 4,4′-Diisocyanatodiphenylmethan eingewogen und unter Argon aufgeschmolzen. Bei 110 bis 120 °C werden 0,4 Mol Trimethylsiloxyaryl(alkyl)amin langsam zugetropft, wobei sich weiße Nebel bilden. Nach beendeter Zugabe des Amins wird die Apparatur unter weiterem Aufheizen bis auf 200 °C vorsichtig evakuiert. Die überdestillierende farblose Flüssigkeit wird anschließend fraktioniert.

2.1 4-Trimethylsiloxyphenylisocyanat

Ausbeute: 95 %
Kp.: 52 - 53 °C (0,24 mbar)
$n_D^{20}$ : 1,5032
IR-Spektrum: 2280 $cm^{-1}$ (N=C=O)

| | | |
|---|---|---|
| $^1$H-NMR-Spektrum: | 6,92 (m);<br>4 : | 0,31 ppm (s)<br>9 |

Elementaranalyse (%):
Berechnet:
C 58,0 H 6,3 N 6,8
Gefunden:
C 58,4 H 6,2 N 7,2

2.2 3-Trimethylsiloxyphenylisocyanat

Ausbeute: 79 %
Kp.: 109 °C (20 mbar)
$n_D^{20}$ : 1,5025
IR-Spektrum: 2280 $cm^{-1}$ (N=C=O)

| | | |
|---|---|---|
| $^1$H-NMR-Spektrum: | 6,93 (m);<br>4 : | 0,34 ppm (s)<br>9 |

Elementaranalyse (%):
Berechnet:
C 58,0 H 6,3 N 6,8
Gefunden:
C 57,9 H 6,4 N 6,7

2.3 4-Trimethylsiloxybutylisocyanat

Ausbeute: 70 %
Kp.: 75 - 76° C (20 mbar)
$n_D^{20}$ : 1,4250
IR-Spektrum: 2270 $cm^{-1}$ (N=C=O)

| | | | | |
|---|---|---|---|---|
| $^1$H-NMR-Spektrum: | 3,58 (t);<br>2 : | 3,27 (t);<br>2 : | 1,58 (m);<br>4 : | 0,05 ppm (s)<br>9 |

Elementaranalyse (%):
Berechnet:
C 51,3 H 9,1 N 7,5
Gefunden:
C 50,4 H 9,0 N 7,4

2.4 3-Trimethylsiloxypropylisocyanat

Ausbeute: 94 %
Kp.: 68,5 - 69° C (20 mbar)
$n_D^{20}$ : 1,4200
IR-Spektrum: 2280 $cm^{-1}$ (N=C=O)

| | | | | |
|---|---|---|---|---|
| $^1$H-NMR-Spektrum: | 3,65 (t);<br>2 : | 3,39 (t);<br>2 : | 1,78 (m);<br>2 : | 0,09 ppm (s)<br>9 |

Elementaranalyse (%):
Berechnet:
C 48,5 H 8,7 N 8,1
Gefunden:
C 48,9 H 9,7 N 8,2

2.5 2-Trimethylsiloxyethylisocyanat

Ausbeute: 84 %
Kp.: 45° C (20 mbar)
$n_D^{20}$ : 1,4140
IR-Spektrum: 2280 und 2240 $cm^{-1}$ (N=C=O)

| | | | |
|---|---|---|---|
| $^1$H-NMR-Spektrum: | 3,68 (t); 2 : | 3,30 (t); 2 : | 0,17 (s) ppm 9 |

Elementaranalyse (%):
Berechnet:
C 45,2 H 8,2 N 8,8
Gefunden:
C 44,7 H 7,6 N 8,8

2.6 2-Trimethylsiloxy-2-methylpropylisocyanat

Ausbeute: 96 %
Kp.: 57 °C
$n_D^{20}$ : 1,4011
IR-Spektrum: 2260 $cm^{-1}$ (N=C=O)

| | | | |
|---|---|---|---|
| $^1$H-NMR-Spektrum: | 3,40 (s); 2 : | 1,22 (s); 6 : | 0,12 ppm (s) 9 |

Elementaranalyse (%):
Berechnet:
C 51,3 H 9,2 N 7,5
Gefunden:
C 51,9 H 9,3 N 7,6

2.7 trans-4-Trimethylsiloxycyclohexylisocyanat

Ausbeute: 93 %
Kp: 96 - 98 °C (20 mbar)
$n_D^{20}$ : 1,4492
IR-Spektrum: 2275 $cm^{-1}$
Elementaranalyse:
Ber.:
C 65,3 H 9,00 N 6,57
Gef.:
C 55,9 H 9,05 N 6,5

2.8 Trimethylsiloxyisocyanat

Ausbeute: 67 %
KP: 105 °C
$n_D^{20}$ : 1,3618
IR-Spektrum: 2280 $cm^{-1}$

2.9 4-Isocyanatobenzoesäuretrimethylsilylester

Ausbeute: 88 %
KP: 85 °C (0,03 mbar)
m.p.: 48
IR-Spektrum: 2280 und 1730 $cm^{-1}$
Elementaranalyse:

Ber.:
C 56,1 H,5,6 N 6,0
Gef.:
C 56,1 H 5,8 N 5,9

2.10 2-Methyl-4-trimethylsiloxyphenylisocyanat

Ausbeute: 90 %
Kp: 67 - 68 °C (0,06 mbar)
$n_D^{20}$ : 1,5056
IR-Spektrum: 2280 $cm^{-1}$
Elementaranalyse:
Ber.:
C 59,7 H 6,9 N 6,3
Gef.:
C 59,8 H 6,9 N 6,4

3. Erfindungsgemäße Verwendung (allgemeine Vorschrift)

In einem ausgeheizten 25 ml Rundkolben mit Magnetrührstab, Mikrodestillationsbrücke, Trockenrohr und Vorlage werden zu 45 mMol Trimethylsiloxyphenol-, Trimethylsiloxyethyl oder -butylisocyanat äquivalente Mengen 6-Isocyanatohexansäurechlorid bzw. 3-Isocyanatopropan säurechlorid hinzupipettiert. Das Reaktionsgemisch wird auf 130 °C erwärmt und unter Rühren bis zum Reaktionsende (nach ca. 24 Stunden) bei dieser Temperatur gehalten.

Die Flüssigkeit wird an einer Kugelrohrdestillationsanlage gereinigt.

3.1 Erfindungsgemäße Verwendung als Reaktionspartner für 6-Isocyanatocapronsäurechlorid

3.1.1 6-Isocyanatocapronsäure-4-isocyanatophenylester

Ausbeute : 72 %
Kp : 160-180 °C (0,37 mbar)
$n_D^{20}$ : 1,5235
IR-Spektrum :
2280 $cm^{-1}$ (N=C=O)
1755 $cm^{-1}$ (COO)

| | | | | |
|---|---|---|---|---|
| $^1$H-NMR-Spektrum: | 7,02(s); 4 : | 3,30(t); 2 : | 2,55(t); 2 : | 1,56(m) ppm 2 |

Elementaranalyse (%):
Berechnet
C 61,3 H 5,1 N 10,2
Gefunden
C 61,1 H 5,1 N 10,6

3.1.2 6-Isocyanatocapronsäure-3-isocyanatophenylester

Ausbeute : 73 %
Kp : 170 ° C (0,05 mbar)
$n_D^{20}$ : 1,5240
IR-Spektrum :
2280 $cm^{-1}$ (N=C=O)
1755 $cm^{-1}$ (COO)

| | | | | |
|---|---|---|---|---|
| $^1$H-NMR-Spektrum: | 7,03(m); 4 : | 3,24(t); 2 : | 2,42(t); 2 : | 1,59(m) ppm 6 |

Elementaranalyse (%):
Berechnet
C 61,3 H 5,1 N 10,2
Gefunden
C 61,4 H 5,2 N 10,3

3.1.3 6-Isocyanatocapronsäure-4-isocyanatobutylester

Ausbeute : 85 %
Kp : 165-170 ° C (0,07 mbar)
$n_D^{20}$ : 1,4620
IR-Spektrum :
2280 $cm^{-1}$ (N=C=O)
1735 $cm^{-1}$ (COO)

| | | | | |
|---|---|---|---|---|
| $^1$H-NMR-Spektrum: | 4,09(t); 2 : | 3,34(t); 4 : | 2.32(t); 2 : | 1,63(m) ppm 10 |

Elementaranalyse (%):
Berechnet
C 56,7 H 7,1 N 11,0
Gefunden
C 56,8 H 7,0 N 11,3

3.1.4 6-Isocyanatocapronsäure-2-Isocyanatoethyl-Ester

Ausbeute: : 31 %
Kp : 150 - 160 ° C (0,1 mbar)
IR-Spektrum :
0.2280 $cm^{-1}$ (N=C=O)
1735 $cm^{-1}$ (COO)

| | | | | | |
|---|---|---|---|---|---|
| $^1$H-NMR-Spektrum: | 4,19(t); 2 : | 3,50(t); 2 : | 3,30(t); 2 : | 2,38(t); 2 : | 1,57 (m) 6 |

3.2 Erfindungsgemäße Verwendung als Reaktionspartner für 3-Isocyanatopropionsäurechlorid

3.2.1 3-Isocyanatopropionsäure-4-isocyanatophenylester

Ausbeute : 70 %
Kp : 160 °C (0,04 mbar)
$n_D^{20}$ : 1,5377
IR-Spektrum :
2270 $cm^{-1}$ (N=C=O)
1750 $cm^{-1}$ (CO)

| | | | |
|---|---|---|---|
| $^1$H-NMR-Spektrum: | 7,50(s); 4 : | 3,63(t); 2 : | 2,79(t) ppm 2 |

Elementaranalyse (%):
Berechnet
C 56,4 H 4,2 N 12,0
Gefunden
C 56,9 H 3,7 N 12,1

3.2.2 3-Isocyanatopropionsäure-3-isocyanatophenylester

Ausbeute : 72 %
Kp : 150-190 °C (0,03 mbar)
Fp : 45-46 °C
IR-Spektrum :
2285 $cm^{-1}$ (N=C=O)
1760 $cm^{-1}$ (COO)

| | | | | |
|---|---|---|---|---|
| $^1$H-NMR-Spektrum: | 7,32(m); 2 : | 6,97(m); 2 : | 3,73(t); 2 : | 2,86(t) ppm 2 |

Elementaranalyse (%):
Berechnet
C 56,4 H 3,4 N 12,0
Gefunden
C 56,7 H 3,8 N 11,8

3.2.3 3-Isocyanatopropionsäure-4-isocanatobutylester

Ausbeute : 60 %
Kp : 150-170 °C (5.10$^{-2}$ mbar)
$n_D^{20}$ : 1,4598
IR-Spektrum :
2280 $cm^{-1}$ (N=C=O)
1735 $cm^{-1}$ (COO)

| | | | | |
|---|---|---|---|---|
| $^1$H-NMR-Spektrum: | 4,18(t); 2 : | 3,46(m); 4 : | 2,60(t); 2 : | 1,71(t) ppm 4 |

Elementaranalyse (%):
Berechnet
C 50,9 H 5,7 N 13,2
Gefunden
C 50,8 H 6,0 N 13,4.

Erfindungsgemäße Verwendung als Reaktionspartner von 4-Isocyanato-benzoylchlorid und 3-Isocyanatobenzoylchlorid.

In Abwandlung der allgemeinen Vorschrift wird in 10 ml o-Dichlorbenzol als Lösungsmittel und in Gegenwart von 0,1 % des Katalysators auf 165 °C bis zum Reaktionsende erwärmt. Nach Abziehen des Lösungsmittels werden die Produkte durch Destillation in einer Kugelrohrdestillationsanlage gegeinigt.

| Nr. | Diisocyanat | Kat. | Heiz-temperatur bei Kugelrohrdestillation in °C | Ausbeute % | Schmelzverhalten** in °C | IR-Banden in $cm^{-1}$ | Elementaranalyse % ber. | gef. |
|---|---|---|---|---|---|---|---|---|
| 3.3.1 | 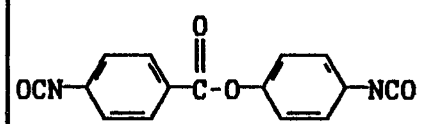 | $TiCl_3$ | 180 - 200 | 68 | K 117,5<br>n 150 i | 2320 , 1740 | C: 64,3<br>H: 2,9<br>N: 10,0 | 64,4<br>2,9<br>10,0 |
| 3.3.2 | 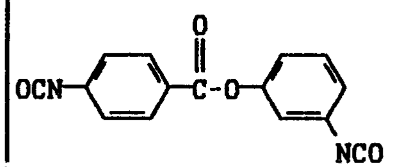 | $TiCl_3$ | 180 | 90 | K 91,8 i | 2300 , 1745 | C:<br>H: s.o.<br>N: | 64,5<br>2,9<br>10,0 |
| 3.3.3 | 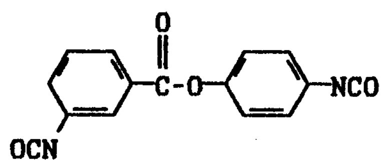 | $ZnCl_2$ | 190 | 30 | K 106 i | 2310 , 1740 | C:<br>H: s.o.<br>N: | 64,4<br><br>10,0 |
| 3.3.4 | 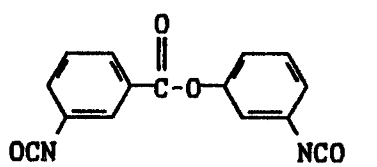 | $TiCl_3$<br>$TiCl_4$<br>$H_2SO_4$<br>$ZnCl_2$<br>DMPA* | 150 - 160 | 86<br>75<br>80<br>36<br>50 | K 69 i | 2280 , 1745 | C:<br>H: s.o.<br>N: | 64,4<br>3,0<br>10,1 |

*) 4-Dimethylamino-pyridin
**) k = kristallin; n = nematisch, i = isotrop, a-anisotrop

4.0 Erfindungsgemäße Verwendung als Reaktionspartner von 4-Isocyanatobenzoylchlorid und 3-Methyl-4-isocyanatobenzoylchlorid

Man verfährt wie unter 3.3 beschrieben.
Beispiele 4.1 bis 4.3 siehe Tabelle.

| Nr. | Diisocyanat | Kat. | Heiztemperatur bei Kugelrohr-destillation in °C | Aus-beute % | Schmelz-verhalten in °C | IR-Banden in $cm^{-1}$ | Elementaranalyse ber. | gef. |
|---|---|---|---|---|---|---|---|---|
| 4.1 | 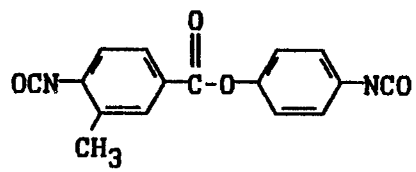 | $H_2SO_4$ | 180 | 95 | K 81 a<br>73 i | 2300, 1740 | C: 65,31<br>H: 3,43<br>N: 9,52 | 65,5<br>3,6<br>9,6 |
| 4.2 | 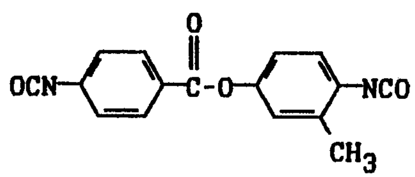 | $H_2SO_4$ | 180 | 92 | K 71,5 a<br>66 i | 2280, 1725 | C: 65,31<br>H: 3,43<br>N: 9,52 | 65,7<br>3,5<br>9,7 |
| 4.3 | 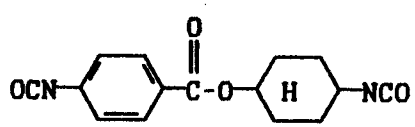 | $TiCl_4$ | 160 | 20 | K 66 a<br>14 i | 2280, 1710 | C: 63,99<br>H: 5,37<br>N: 9,32 | 63,7<br>5,6<br>9,4 |

## Ansprüche

1. Verfahren zur Herstellung von silylierte Hydroxylgruppen oder silylierte Carboxylgruppen als Substituenten aufweisenden Isocyanaten, dadurch gekennzeichnet, daß man
i) den Isocyanaten entsprechende, silylierte alkoholische oder phenolische Hydroxylgruppen oder silylierte Carboxylgruppen als Substituenten aufweisende Amine oder O-silyliertes Hydroxylamin
in Abmischung mit
ii) mindestens äquivalenten Mengen an unter den Verfahrensbedingungen nicht flüchtigen organischen Polyisocyanaten
auf Temperaturen von bis zu 300 °C, gegebenenfalls unter vermindertem Druck erhitzt und die Verfahrensprodukte in Form des bei dieser Umsetzung anfallenden Destillats gewinnt.

2. Verfahren gemäß Anspruch 1, dadurch gekennzeichnet, daß man als Komponente i) Verbindungen der Formeln

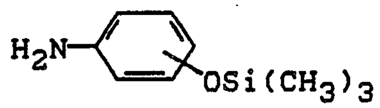

oder

$H_2N-(-CH_2-)_m-OSi(CH_3)_3$

verwendet, wobei
m für 0 oder eine ganze Zahl von 2 bis 4 steht.

3. Verfahren gemäß Anspruch 1 und 2, dadurch gekennzeichnet, daß man als Komponente ii) Polyisocyanate oder Polyisocyanatgemische der Diphenylmethanreihe verwendet.

4. Verwendung der gemäß Anspruch 1 bis 3 erhaltenen, silylierte alkoholische oder phenolische Hydroxylgruppen als Substituenten aufweisenden Isocyanate als Reaktionspartner von Isocyanatocarbonsäurechloriden bei der Herstellung von Estergruppen aufweisenden Polyisocyanaten.

5. Estergruppen aufweisende Polyisocyanate ausgewählt aus der Gruppe bestehend aus 4-(4-Isocyanatocyclohexyloxycarbonyl)-phenylisocyanat, 2-methyl-4-(4-isocyanatophenoxycarbonyl)-phenylisocyanat und 4-(3-Methyl-4-isocyanatophenoxycarbonyl)-phenylisocyanat.